# EUROPEAN PATENT APPLICATION

(11) **EP 1 652 764 A1**
(43) Date of publication of application: **03.05.2006**
(21) Application number: 04105359.6
(22) Date of filing: 28.10.2004
(51) Int. Cl.: B62K 21/12, B62K 21/14

(54) **Device for mounting accessory handlebars to an existing bicycle handlebar**

(71) Applicant: WEI HAU ACCESORIES CO., LTD, YUNG CHING HSIANG, CHANGHUA (TW)
(72) Inventor: Huang, Yuan-Hsin, Yung Ching Hsiang, Changhua (TW)
(74) Representative: Sanz-Bermell Martinez, Alejandro

(57) **Abstract**

A clipping cover for the assembling of a bicycle handle accessories that is disposed on the front stem of a bicycle, wherein the clamp mount crown (3) has a clamp ring (32) at both the left and right sides of its lower extremity and an elongate tab (33) at both the left and right sides of its upper extremity. Thus, when the stem clamp mount (2) and clamp mount crown (3) are utilized to secure various shaped handlebars (1A,1B,1C) into position, the two elongate tabs (33) and clamp rings (32) of the clamp mount crown (3) respectively enable the installation of two forearm support base connecting bar assemblies (4,5) and two accessory handlebars (6) such that the connecting bars (5) below the accessory handlebars (6) and forearm support base (4) are movable forward and backward to effect adjustment. As such, the clamp mount crown provides for accessory installation as well as direction and length variations according to rider requirements to achieve the best grasping posture.

## Description

### BACKGROUND OF THE INVENTION

### 1) FIELD OF THE INVENTION

The invention herein relates to bicycle componentry, specifically a clipping cover for the assembling of a bicycle handle accessories that is disposed on the front stem of a bicycle. The said stem clamp mount and clamp mount crown are utilized to secure various shaped handlebars into position, the clamp mount crown at the same time also enables the installation of two forearm support base connecting bar assemblies and two accessory handlebars, the direction and length of which can be varied according to rider requirements to achieve the best grasping posture.

### 2) DESCRIPTION OF THE PRIOR ART

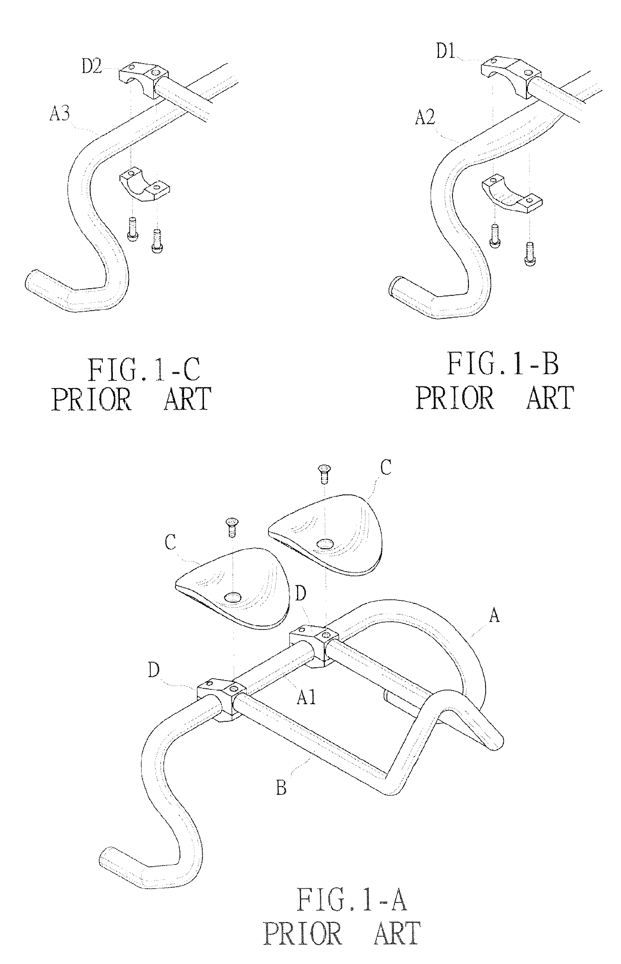

Conventional designs that accommodate the installation of accessory handlebars with bicycle handlebars, such as U.S. Patent No. 4750754, 4878397, 5000469, and 5154095, address how to further improve effective handgrip position by means accessory handlebars among bicycle handlebars, specifically equipping handlebars with after-market accessory handlebars that at the same time provide comfortable forearm support and feature soft padded sleeving over the handlebars or the support platforms C additionally disposed on the accessory handlebar B (as shown in FIG. 1-A). However, manufacturers have discovered that when the handlebar A and the accessory handlebar B are one-piece constructs, soft padded sleeving is difficult to install on the handlebar A, especially if the front portion of the accessory handlebar B is not round pipe but oval, oblate, or other unusual shape, in which case installation is not possible; as a result, support platforms C are directly added onto the handlebar A or the accessory handlebar B, as indicated in FIG. 1-A; although this approach improves upon the drawback of the said soft padded sleeving installation, if the handlebar A is replaced such that the diameter A1 of the handlebar A is of a larger diameter A2 or a smaller diameter A3, then the original clamp mount D is unusable and a larger clamp mount D1 or a smaller clamp mount D2 (as shown in FIG. 1-B and FIG. 1-C) needed instead, resulting in problems for the rider.

In view of the above situation, the applicant of the invention herein sought improvements for the said shortcomings that culminated in the successful research and development of the clamp mount crown for bicycle handlebar accessory installation of present invention and the submitting of its patent application.

### SUMMARY OF THE INVENTION

The primary objective of the invention herein is to provide a clipping cover for the assembling of a bicycle handle accessories that is disposed on the front stem of a bicycle, the said clamp mount capable of securing various shaped handlebars into position by means of bolts; the clamp mount crown has a clamp ring at both the left and right sides of its lower extremity and an elongate tab at both the left and rigth sides of its upper extremity, the two elongate tabs and the two clamp rings of the clamp mount crown respectively enabling the installation of two forearm support base connecting bar assemblies and two accessory handlebars such that the connecting bars below the accessory handlebars and forearm support base are movable forward and backward to effect adjustment; as such, the clamp mount crown provides for accessory installation as well as direction and length variations according to rider requirements to achieve the best grasping posture.

### BRIEF DESCRIPTION OF THE DRAWINGS

Figure 1-A is an isometric drawing of a conventional structure.
Figure 1-B is an assembly drawing of another conventional structure.
Figure 1-C is an assembly drawing of another conventional structure.
Figure 2 is an orthographic drawing of invention herein in the installed position.
Figure 3 is an exploded drawing of the structure of the invention herein.
Figure 4-A is an isometric drawing of the invention herein following assembly.
Figure 4-B is an isometric drawing of the invention herein utilized with another handlebar (1).
Figure 4-C is an isometric drawing of the invention herein utilized with another handlebar (2).
Figure 5-A is an orthographic drawing of the invention herein with an accessory handlebar in it.
Figure 5-B is a cross-sectional drawing of invention herein with the accessory handlebar in it.
Figure 6-A is an orthographic drawing of the forearm support base operation.
Figure 6-B is a magnified drawing of the forearm support base operation.
Figure 6-C is a cross-sectional drawing of the forearm support base.
Figure 7 is an exploded drawing of invention herein in another installed position.

### DETAILED DESCRIPTION OF THE INVENTION

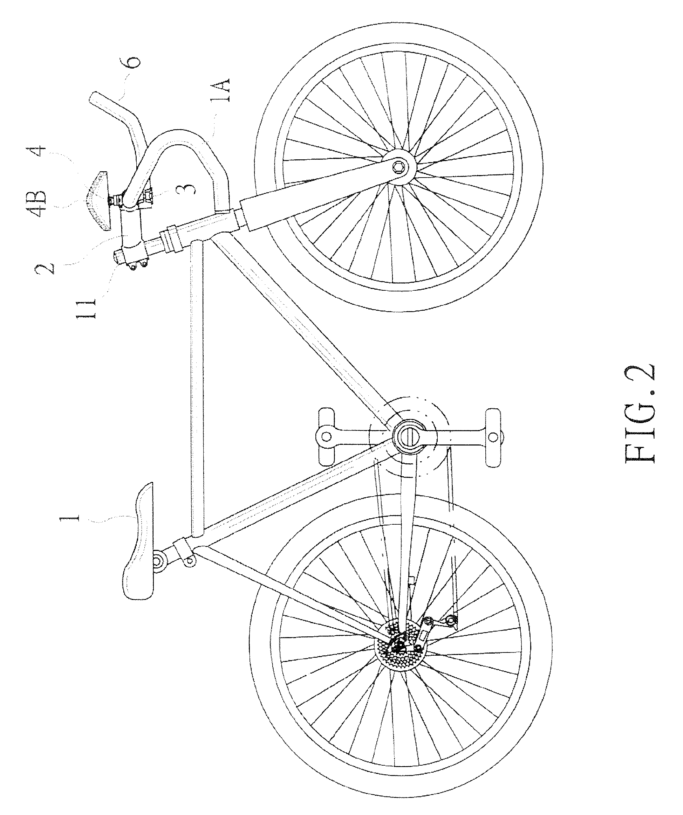

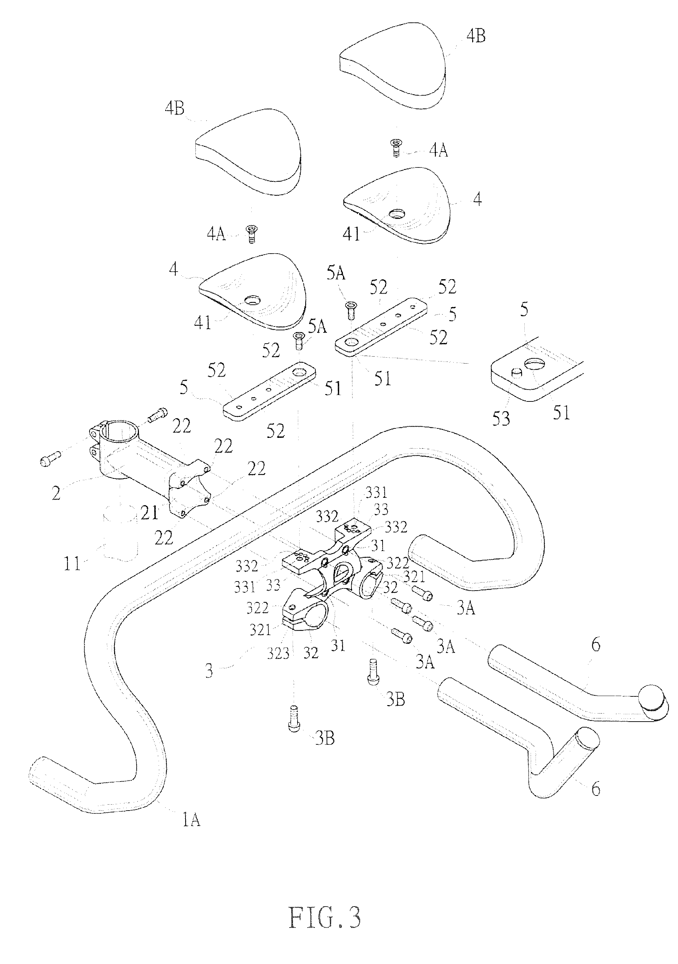

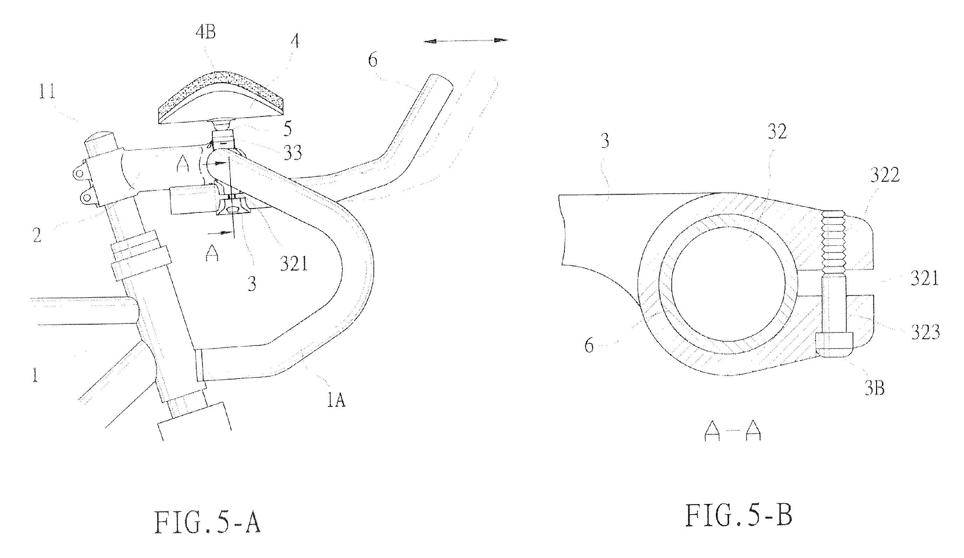

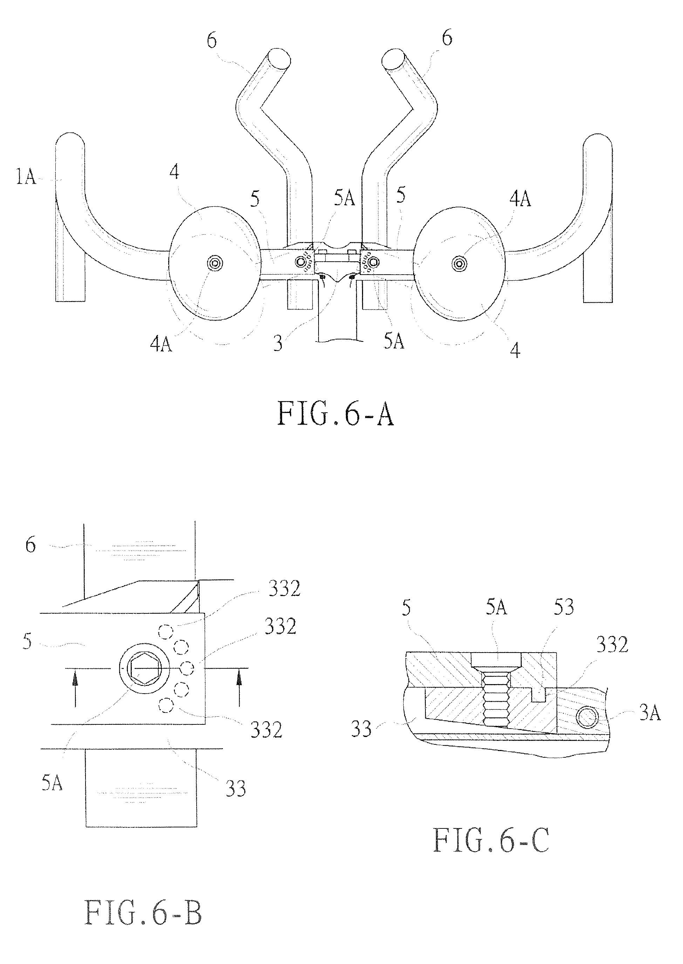

Referring to FIG. 2 and FIG. 3, the clipping cover for the assembling of a bicycle handle accessories of the invention herein is disposed on the front stem 11 of a bicycle 1. the said stem clamp mount 2 consisting of a concave section 21 and a threaded hole 22 at each of its four corners that provides for the fastening of bolts 3A inserted via four through-holes 31 of a clamp mount crown 3 to secure a handlebar 1A, wherein the clamp mount crown 3 has in addition to the four holes 31 a clamp ring 32 at both the left and right sides of its lower extremity and, furthermore, a continuous breach 321 disposed along the side of each clamp ring 32, with a threaded hole 322 and a through-hole 323 formed at the upper and lower sides of each breach 321 such that an accessory handlebar 6 can be placed inside the clamp ring 32 and a bolt 32B inserted via each through-hole 323 and the breach 321 fastened into the threaded hole 322 (as shown in FIG. 5-B): the clamp mount crown 3 has an elongate tab 33 at both the left and the right side of its upper extremity, each elongate tab 33 has a threaded hole 331 with a plurality of indentations 332 around it: to install the forearm support base 4 connecting bar 5 to the threaded holes 331 in the left and right sides of the elongate tab 33 at the upper extremity of the clamp mount crown 3, the connecting bar 5 has a round hole 51, a plurality of threaded holes 52, and protruding section 53 at the bottom, a bolt 4A is inserted via a round hole 41 in the forearm support base 4 and fastened to a threaded hole 52 in the connecting bar 5, following which the connecting bar 5 bolt 5A is fastened to the elongate tab 33 threaded hole 331 such that the protruding section 53 at the bottom of the connecting bar 5 is situated in an indentation 332 of the elongate tab 33 as a restraining means (as shown in FIG. 6-B and FIG. 6-C), and a soft pad 4B is positioned on the forearm support base 4.

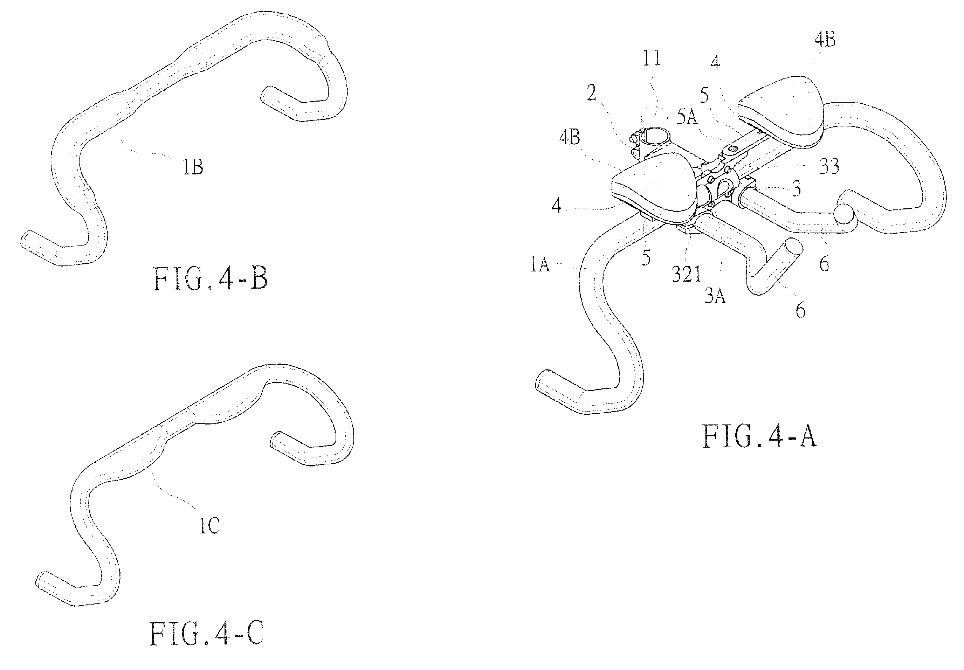

Thus, to install the stem clamp mount 2 at the bicycle 1 front stem 11, after various shaped handlebars 1A, 1B, and 1C (as shown in FIG. 4-A, FIG 4-B, and FIG. 4-C) are secured in the clamp mount crown 3, since the clamp mount crown 3 is installed at the original stem clamp mount 2 and, furthermore, each handlebar 1A, 1B, and 1C whether of differing outer diameter, fitted with soft padded sleeving, or multiple diameter, all are mountabie at their center positions in the stem clamp mount 2 and the clamp mount crown 3 without installation difficulties and, as such, the clamp mount crown 3 accommodates handlebars of varying shape or diameter. When the rider wants to install an accessory handlebar 6 later on, it is directly inserted into the clamp ring 32 at both the left and right sides at the lower extremity of the clamp mount crown 3 and after adjusting the length and distance, a bolt 3B is tightened, as indicated in FIG. 5-A and FIG. 5-B; to additionally install a forearm support base 4 for greater comfort, the forearm support base 4 connecting bar 5 assembly is installed into the threaded holes 331 in the left and right sides of the elongate tab 33 at the upper extremity of the clamp mount crown 3, and since the protruding section 53 of the connecting bar 5 conjoined to the forearm support base 4 is situated in an indentation 332 of the clamp mount crown 3 elongate tab 33 (as shown in FIG. 6-B and FIG. 6-C), when the rider feels it necessary, then the assembled forearm support base 4 connecting bar 5 is lifted slightly upward such that the connecting bar 5 protruding section 53 is shifted into another indentation 332 in the clamp mount crown 3 elongate tab 33 and, as such, the forearm support base 4 and connecting bar 5 assembly is movable forward or backward for adjusting the accessory handlebar 6 (as shown in FIG. 6-A) to achieve the best grasping posture.

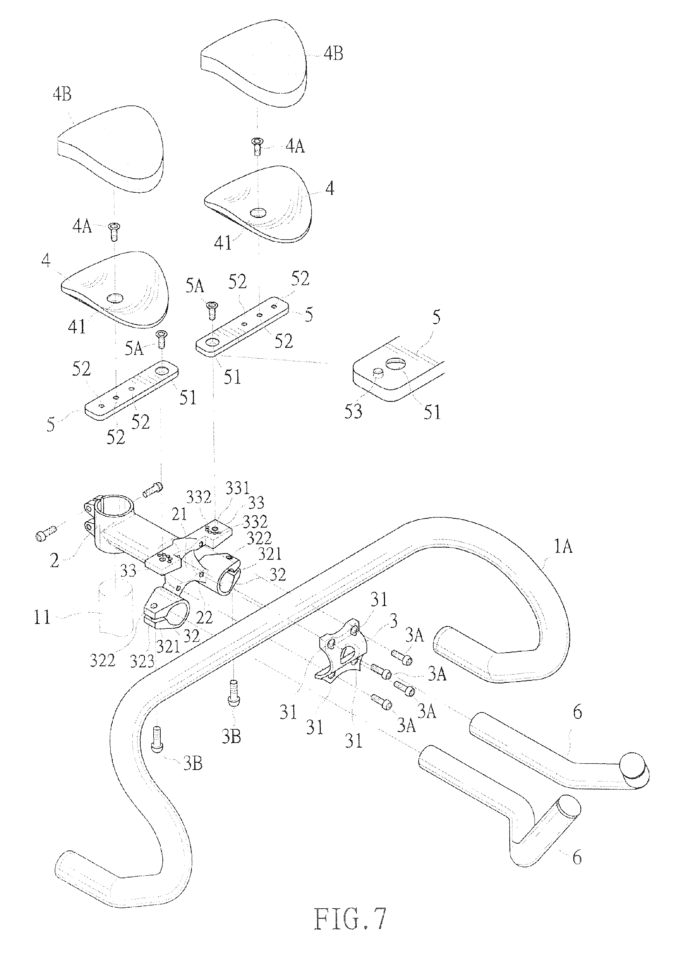

Additionally, the elongate tab 33 at the upper extremity of both the left and the right side of the clamp mount crown 3 as well as the clamp ring 32 at both the left and right sides of its lower extremity can be utilized around the corners of the stem clamp mount 2 concave section 21 (as shown in FIG. 7)

As such, it is only necessary to have an original stem clamp mount 2 along with a clamp mount crown 3 designed to accommodate the installation of an accessory handlebar 6 and forearm support base 4 as required by the rider and, at the same time, the said clamp mount crown 3 is not subject to any installation difficulty due to varying handlebar shape and diameter, thereby allowing the rider to rapidly, conveniently, and easily complete assembly to achieve the best grasping posture; since the invention herein is demonstrably capable of practical performance and, furthermore, complies with new patent application requirements as stipulated in Article 97, the present invention is submitted to the patent bureau for review and the granting of the commensurate patent rights.

## Claims

1. A clipping cover for the assembling of a bicycle handle accessories that is disposed on the front stem of a bicycle, the said stem damp mount consisting of a concave section and a threaded hole at each of its four corners that provides for the fastening of bolts inscricd via four through-holes of a clamp mount crown to secure a handlebar, wherein the said clamp mount crown has in addition to the said four through-holes a clamp ring at both the left and right sides of its lower extremity and, furthermore, a continuous breach disposed along the side of each said clamp ring, with a threaded hole and a through-hole formed at the upper and lower sides of the each said breach such that an accessory handlebar can be placed inside the said clamp ring and a bolt inserted via each said through-hole and the said breach fastened into the said threaded hole; the said clamp mount crown has an elongate tab at both the left and the right side of its upper extremity, each said elongate tab has a threaded hole with a plurality of indentations around it; to install a forearm support base connecting bar to the said threaded holes in the left and right sides of the said elongate tab at the upper extremity of the said clamp mount crown, the said connecting bar has a round hole, a plurality of threaded holes, and protruding section at the bottom, a bolt is inserted via a round hole in the said forearm support base and fastened to a threaded hole in the said connecting bar, following which a bolt of the said connecting bar is fastened to the said elongate tab threaded holes such that the said protruding section at the bottom of the said connecting bar is situated in an indentation of the said elongate tab as a restraining means; thus, when the said stem clamp mount and the said clamp mount crown are utilized to secure various shaped handlebars into position, the two said elongate tabs and the two said clamp rings of the said clamp mount crown respectively enable the installation of two said forearm support base connecting bar assemblies and two said accessory handlebars such that said connecting baas below the said accessory handlebars and the said forearm support base are movable forward and backward to effect adjustment; as such, the said clamp mount crown provides for accessory installation and achieves the best grasping posture.

2. As mentioned in Claim 1 of the clipping cover for the assembling of a bicycle handle accessories of the invention herein, the said elongate tab at the upper extremity of both the left and the right side of the said clamp mount crown as well as the said clamp ring at both the left and right sides of its lower extremity can be utilized around the corners of the said stem clamp mount concave section.
